# EUROPEAN PATENT SPECIFICATION

(11) **EP 2 811 543 B1**
(45) Date of publication and mention of the grant of the patent: **18.04.2018**
(21) Application number: 14171631.6
(22) Date of filing: 06.06.2014
(51) Int. Cl.: H01M 2/10, H01M 2/12, H01M 10/48, B63G 8/00, H01M 10/0525

(54) **Apparatus for supplying electric power to a naval unit, particularly a submarine unit**
Vorrichtung zur elektrischen Energieversorgung eines Flottenverbands, insbesondere eine Unterseebooteinheit
Appareil d'alimentation électrique pour unité navale, particulièrement une unité sous-marine

(30) Priority: 07.06.2013 IT TO20130473
(43) Date of publication of application: 10.12.2014
(73) Proprietor: LEONARDO S.p.A., 00195 Roma (IT)
(72) Inventor: Tevene', Bruno, 57127 Livorno (IT); Bianchi, Francesca, 57127 Livorno (IT); Melidoro, Enza, 57125 Livorno (IT); Campo, Diego, 56038 Ponsacco (IT)
(74) Representative: Bongiovanni, Simone

(56) References cited:
- EP-A1- 2 077 592
- EP-A1- 2 262 048
- WO-A1-2005/036678
- WO-A1-2012/090048
- US-A1- 2013 040 172
- US-B2- 8 137 834

## Description

The present invention relates to an electric power supply unit for a naval vessel, in particular a submarine vessel.

As is known, many submarine vessels, for example torpedoes, are propelled by high-power electric motors that absorb extremely high current (the peak current can be in the order of 0.5-1 KA) for a very short lapse of time, in the order of about ten to twenty minutes.

High energy density electric units, such as electrochemical batteries, are normally used to power these electric motors.

Electrochemical batteries generally comprise: a primary electrochemical battery in which a chamber houses an anhydrous electrolyte (for example, sodium hydroxide) and is provided with members for the controlled intake of a flow of water from the aquatic environment, to form, following execution of a water intake command, a liquid electrolyte, and members for the discharge of emissions into the aquatic environment, typically gases produced by the chemical reaction in the primary battery; the chamber houses a system for recirculating the fluid electrolyte through a plurality of electrochemical cells housed in the chamber using an electric pump; an auxiliary battery that can be activated by remote control for opening the controlled intake members and powering the electric pump so as to effect the formation and circulation of the electrolyte.

Batteries of the above-described type, as is evident from the outline description provided above, have an extremely complex structure, comprising mechanical and electrical members and members for ensuring the flow of water to and inside the chamber. The malfunctioning of one of these members can prevent, partially or completely, the battery from operating. In addition, the chemical reaction upon which the generation of electric power is based is violently exothermic;
for this reason, the behaviour of electrochemical batteries is rather "delicate" and the various parameters (pressure/temperature) of the electrolyte in the chamber must be carefully monitored to prevent malfunctioning and/or potentially hazardous operation.

To solve the above-indicated problems, the use of lithium-ion polymer batteries, which are normally used in the automotive field for powering electric vehicles, has been proposed.

EP-2,262,048 describes the use of lithium-ion polymer batteries for an hybrid or electrical vehicle, EP-2,077,592 describes a battery pack accommodating a battery having a risk of releasing a gas under abnormal condition and WO2012/090048 describes a battery in which a battery cell housed in a case is pressurized by a gas.

These batteries have a series of intrinsic risks that make them potentially hazardous for underwater applications, in particular if these batteries are housed in a submarine.

In fact, it can be useful to remember that the "chemistry" of these batteries is not as safe as that of other batteries in everyday use: a lithium-ion polymer battery can actually explode if overheated or excessively charged and/or produce quantities of noxious gases. A lithium-ion polymer battery requires various obligatory safety systems inside it (for example, a vent valve to control the internal pressure).

The object of the present invention is to provide an electric power supply unit for a naval vessel in which it is possible to safely arrange lithium-ion polymer batteries.

The foregoing object is achieved by the present invention, which relates to an electric power supply unit for a submarine vessel, in particular a torpedo, wherein a fluidtight tubular shell defines a cavity which is elongated along an axis and which contains one or more electric power supply modules, each of which comprises an insulating container housing a plurality of batteries, wherein said batteries are of the lithium-ion polymer type; said tubular shell being provided with a first normally-closed valve communicating on one side with the elongated cavity and on the other with the outside of the shell; said first valve being configured to allow extraction of air from the elongated cavity and subsequent introduction of inert gas until an operating pressure of the inert gas inside the shell is achieved; said inert gas penetrating inside the containers, which are not be fluidtight in order to prevent combustion processes of the substances constituting said batterie; the unit is further provided with a second valve arranged on an end wall of the tubular shell that separates said elongated cavity from an auxiliary containment cavity adjacent thereto, provided in said naval vessel and closed to the outside of said naval vessel; said second valve (14) being of the normally-closed type and configured to open when the pressure inside the elongated cavity significantly exceeds the operating pressure to allow an outflow of gas to the auxiliary containment cavity, whereby preventing the pressure from increasing inside the elongated cavity in the case of accidental production of gas by one or more batteries.

The invention will now be described with particular reference to the attached drawings, which illustrate a non-limitative embodiment, and where:
Figure 1 shows a perspective view of an electric power supply unit for a naval vessel according to the present invention; and
Figures 2 and 3 show a detail of the unit in Figure 1.

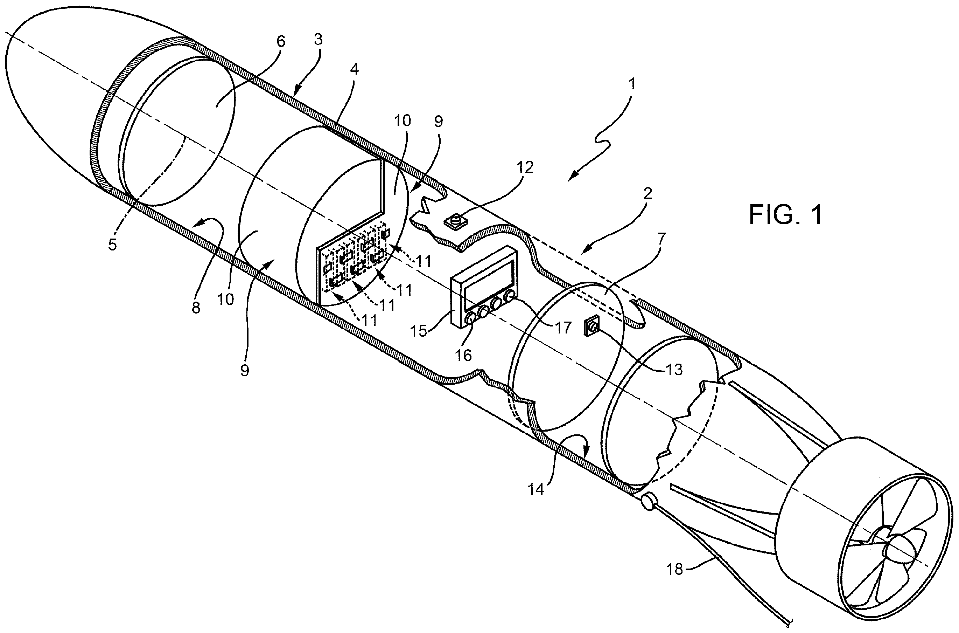

In Figure 1, reference numeral 1 indicates, as a whole, an electric power supply unit for a naval vessel, in particular a submarine vessel 2 (torpedo - schematically shown).

The unit 1 comprises a fluidtight tubular shell 3 comprising a cylindrical wall 4 coaxial with an axis 5 and closed at the opposite ends by flat circular walls 6 and 7 perpendicular to axis 5. In this way, the tubular shell 3 defines a cylindrical cavity 8 coaxial with axis 5. Preferably, but not exclusively, the cylindrical wall 4 is formed by a tubular wall that defines the elongated body of the torpedo 2 and walls 6 and 7 are partition walls of the elongated wall of the torpedo 2. All the same, it is evident that the shell 3 could be made separately from the body of the torpedo 2 and housed therein.

The cavity 8 contains one or more electric power supply modules 9, each of which comprises an insulating container 10 housing a plurality of lithium-ion polymer batteries 11 (for example 27) connected in parallel with each other. Each module 9 has a positive/negative terminal and the various modules 9 are connected in series with each other to generate an overall voltage of about a hundred volts.

According to the present invention, the shell 3 is provided with a first valve 12 of the normally-closed type communicating on one side with the elongated cavity 8 and on the other with the outside of the shell 3 (in this case, also with the outside of the torpedo 2). The valve 12 is of known type and configured to allow extraction of air from the elongated cavity (to perform this operation, the valve 12 is connected in a known manner to a vacuum generation device) so that the air inside the cavity 8 is sucked out and the pressure inside the chamber drops significantly (0.3 bar). When the operations of depressurizing the cavity 8 are completed, the valve 12 is connected (according to known methods) to a source of pressurized inert gas (usually nitrogen, coming, for example, from a pressurized gas tank), which is introduced into the chamber 8 through the valve 12 until an operating pressure of the inert gas inside the cavity 8 is obtained (1.2-1.5 bar). Upon reaching this operating pressure, the gas source is disconnected from the valve 12, which then closes automatically.

The inert gas penetrates inside the containers 10, which are not be fluidtight, and surrounds the batteries 11.

As is known, under a set of given conditions, inert gases do not activate chemical reactions and are generally use to avid undesired chemical reactions such as oxidation and hydrolysis.

For example, noble gases and nitrogen do not react with many substances and are considered inert gases.

The inert gases commonly used, due to their high abundance in nature and low cost, are nitrogen N₂ and argon Ar (the percentages of these gases in the air are: N₂ 78% and Ar 1%).

These inert gases prevent the triggering and development of combustion (which specifically requires oxygen), even if the batteries 11 reach high temperatures due to malfunction.

For this reason, processes of accidental combustion of the substances constituting the batteries 11 are prevented. The safety of the unit 1 is also significantly improved in the case of battery malfunction.

The unit 1 is further provided with a venting valve 13 arranged on an end wall 6 or 7 of the tubular shell 3 that separates the elongated cavity 8 from an auxiliary containment cavity 14 adjacent thereto, provided in the naval vessel 2 and closed to the outside of the naval vessel. The auxiliary cavity 14 is usually made in a section of the torpedo 2.

The venting valve 13, of the normally-closed type, is configured to open when the pressure inside the elongated cavity 8 significantly exceeds the operating pressure to allow an outflow of gas to the auxiliary containment cavity 14, preventing the pressure from increasing inside the elongated cavity 8 in the case of accidental production of gas by one or more batteries 11 due to malfunction. An excessive increase in pressure in the elongated cavity 8 could even result in the explosion and/or fracture of the shell 3.

The unit 1 may comprise an electronic unit 15 cooperating with pressure sensors 16 and 17 housed inside the elongated chamber 8. The electronic unit 15 is configured to detect a rapid increase in pressure inside the chamber 8 (derived from the pressure signal with respect to time), indicative of accidental production of gas by one or more batteries 11 due to malfunction, and a decrease in pressure inside the chamber (the measured pressure drops below a threshold value), indicative of leakage in the airtight shell 3. In both cases, the electronic unit 15 transmits an outward-bound alarm message from the naval vessel, for example through the conductor lines 18 that connect the torpedo 2 to the control electronics for the naval vessel.

The pressure sensors 16 and 17 may comprise a single pressure gauge or a pressure switch for detecting a maximum pressure and a pressure switch for detecting a minimum pressure.

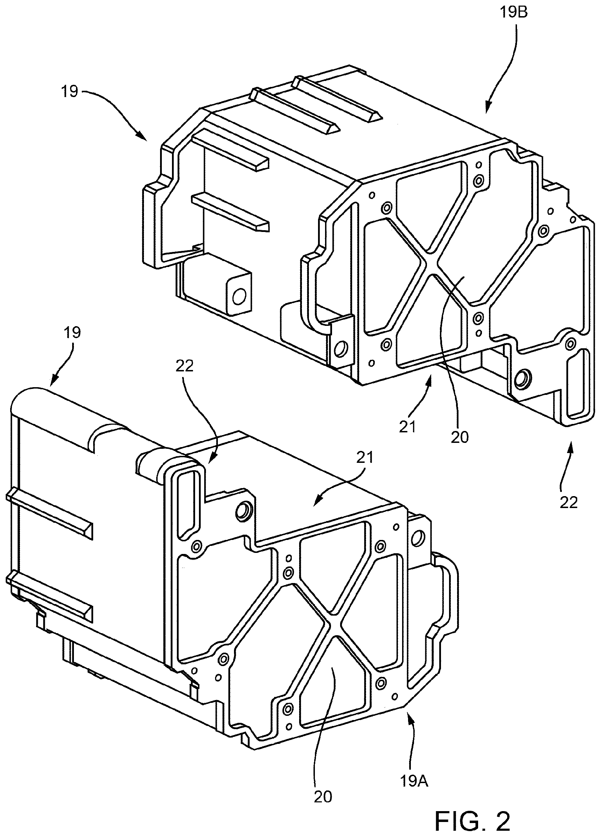

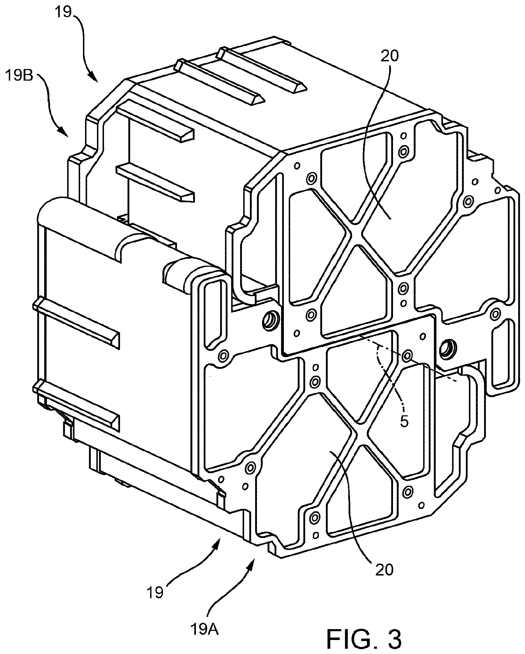

As shown in Figures 2 and 3, each insulating container comprises a cup-shaped body 19 closable with a flat insulating cover 20 and configured to house the lithium-ion polymer batteries arranged close to each other (the batteries 11 have a flat rectangular shape). The containers comprise first containers 19-A and second containers 19-B having a complementary shape so that when coupled with each other (see Figure 3), they are symmetrical with respect to axis 5.

In particular, the cup-shaped body 19 has an approximately L-shaped form in plan view, comprising a main body 21 and an appendage 22 (Figure 2); when containers 19-A and 19-B are coupled together, the main bodies have adjacent and superimposed walls and the appendages 22 extend from one cup-shaped body 19 to the other. In this way, the space occupied by the two containers 19-A and 19-B coupled together enables them to be housed inside the cylindrical cavity 8.

## Claims

1. An electric power supply unit (1) for a submarine vessel, in particular a torpedo, wherein a fluidtight tubular shell (3) defines a cavity (8) which is elongated along an axis (5) and contains one or more electric power supply modules (9), each of which comprises an insulating container (10) housing a plurality of batteries (11),
**characterized in that** said batteries (11) are of the lithium-ion polymer type;
said tubular shell (3) being provided with a first normally-closed valve (12) communicating on one side with the elongated cavity (8) and on the other with the outside of the shell (3); said first valve (12) being configured to allow extraction of air from the elongated cavity (8) and subsequent introduction of inert gas until an operating pressure of the inert gas inside the shell is achieved; said inert gas penetrating inside the containers (10), which are not fluidtight in order to prevent combustion processes of the substances constituting said batteries (11); the unit (1) is further provided with a venting valve (13) arranged on an end wall (7) of the tubular shell that separates said elongated cavity (8) from an auxiliary containment cavity (14) adjacent thereto, provided in said naval vessel and closed to the outside of said naval vessel; said venting valve (13) being of the normally-closed type and configured to open when the pressure inside the elongated cavity (8) significantly exceeds the operating pressure to allow an outflow of gas to the auxiliary containment cavity (14), whereby preventing the pressure from increasing inside the elongated cavity in the case of accidental production of gas by one or more batteries (11).

2. The unit of claim 1, wherein an electronic unit (15) cooperating with pressure sensors (16 and 17) housed inside the elongated chamber is provided; said electronic unit (15) being configured to detect a rapid increase in pressure inside the elongated chamber, indicative of accidental production of gas by one or more batteries (11), and a decrease in pressure inside the elongated chamber (8), indicative of leakage in the fluidtight shell; said electronic unit (15) being configured to transmit an alarm message on said detections.

3. The unit of claim 2, wherein the pressure sensors comprise a pressure gauge.

4. The unit of claim 2, wherein the pressure sensors comprise a pressure switch for detecting a maximum pressure, and a pressure switch for detecting a minimum pressure.

5. The unit of any one of the preceding claims, wherein the insulating container (10) comprises a cup-shaped body (19) closable with a flat insulating cover (20) and configured to house said lithium-ion polymer batteries (11).

6. The unit of any one of the preceding claims, wherein the containers comprise first containers (19-A) and second containers (19-B) having a complementary shape so that, when coupled with each other, they are symmetrical with respect to said axis (5).

7. The unit of claim 6, wherein the container (19) has an approximately L-shaped form in plan view, comprising a main body (21) and an appendage (22); when the first/second containers (19-A and 19-B) are coupled to each other, their main bodies have adjacent walls and the appendages (22) extend from one container (19) to the other.

## Patentansprüche

1. Elektrische Stromversorgungseinheit (1) für ein Unterwasserfahrzeug, insbesondere einen Torpedo, wobei eine fluiddichte röhrenförmige Hülle (3) einen Hohlraum (8) definiert, der sich entlang einer Achse (5) erstreckt und ein oder mehrere elektrische Stromversorgungsmodule (9) beinhaltet, wobei jedes davon einen isolierenden Behälter (10) umfasst, der mehrere Batterien (11) beherbergt,
**dadurch gekennzeichnet, dass** die Batterien (11) vom Lithium-Ionen-Polymertyp sind;
wobei die röhrenförmige Hülle (3) mit einem ersten, für gewöhnlich geschlossenen Ventil (12) bereitgestellt ist, das an einer Seite mit dem länglichen Hohlraum (8) und an der anderen Seite mit der Außenseite der Hülle (3) verbunden ist; wobei das erste Ventil (12) konfiguriert ist, eine Entnahme von Luft aus dem länglichen Hohlraum (8) und eine nachfolgende Einleitung von Inertgas, bis ein Betriebsdruck des Inertgases innerhalb der Hülle erzielt ist, zu ermöglichen; wobei das Inertgas in die Behälter (10) eindringt, die nicht fluiddicht sind, um Verbrennungsvorgänge der Substanzen, die die Batterien (11) ausmachen, zu verhindern;
wobei die Einheit (1) ferner mit einem Lüftungsventil (13) bereitgestellt ist, das an einer Stirnwand (7) der röhrenförmigen Hülle angeordnet ist, die den länglichen Hohlraum (8) von einem daran angrenzenden Hilfseingrenzungshohlraum (14) trennt, der in dem Marinefahrzeug bereitgestellt und zur Außenseite des Marinefahrzeugs hin geschlossen ist; wobei das Lüftungsventil (13) vom für gewöhnlich geschlossenen Typ ist und konfiguriert ist, sich zu öffnen, wenn der Druck innerhalb des länglichen Hohlraums (8) den Betriebsdruck erheblich übersteigt, um einen Ausstrom von Gas zum Hilfseingrenzungshohlraum (14) zu gestatten, wodurch verhindert wird, dass der Druck innerhalb des länglichen Hohlraums im Fall einer unbeabsichtigten Produktion von Gas durch eine oder mehrere Batterien (11) steigt.

2. Einheit nach Anspruch 1, wobei eine Elektronikeinheit (15) bereitgestellt ist, die mit Drucksensoren (16 und 17), die innerhalb des länglichen Hohlraums beherbergt sind, zusammenwirkt; wobei die Elektronikeinheit (15) konfiguriert ist, einen rasanten Druckanstieg innerhalb der länglichen Kammer, der auf eine unbeabsichtigte Produktion von Gas durch eine oder mehrere Batterien (11) hinweist, und einen Druckabfall innerhalb der länglichen Kammer (8), der auf ein Leck in der fluiddichten Hülle hinweist, zu erfassen; wobei die Elektronikeinheit (15) konfiguriert ist, eine Alarmnachricht bei den Erfassungen zu senden.

3. Einheit nach Anspruch 2, wobei die Drucksensoren einen Druckmesser umfassen.

4. Einheit nach Anspruch 2, wobei die Drucksensoren einen Druckschalter zum Erfassen eines maximalen Drucks und einen Druckschalter zum Erfassen eines minimalen Drucks umfassen.

5. Einheit nach einem der vorangehenden Ansprüche, wobei der isolierende Behälter (10) einen becherförmigen Körper (19) umfasst, der mit einer flachen isolierenden Abdeckung (20) schließbar ist und konfiguriert ist, die Lithium-Ionen-Polymerbatterien (11) zu beherbergen.

6. Einheit nach einem der vorangehenden Ansprüche, wobei die Behälter erste Behälter (19-A) und zweite Behälter (19-B) mit einer komplementären Form umfassen, sodass sie, wenn sie miteinander gekoppelt sind, in Bezug auf die Achse (5) symmetrisch sind.

7. Einheit nach Anspruch 6, wobei der Behälter (19) in Draufsicht annähernd eine L-förmige Gestalt hat, umfassend einen Hauptkörper (21) und einen Anhang (22); wenn die ersten/zweiten Behälter (19-A und 19-B) miteinander gekoppelt sind, deren Hauptkörper angrenzende Wände haben und die Anhänge (22) sich von einem Behälter (19) zum anderen erstrecken.

## Revendications

1. Unité d'alimentation électrique (1) pour engin sous-marin, en particulier une torpille, dans laquelle une coque tubulaire étanche aux fluides (3) définit une cavité (8) qui est allongée le long d'un axe (5) et renferme un ou plusieurs modules d'alimentation électrique (9), chacun comprenant un récipient isolant (10) logeant une pluralité de batteries (11),
**caractérisée en ce que** lesdites batteries (11) sont du type lithium-ion-polymère ;
ladite coque tubulaire (3) étant pourvue d'une première soupape normalement fermée (12) communiquant, sur un côté, avec la cavité allongée (8) et, sur l'autre, avec l'extérieur de la coque (3) ; ladite première soupape (12) étant configurée pour permettre l'extraction d'air depuis la cavité allongée (8) puis l'introduction de gaz inerte jusqu'à ce qu'une pression opérante du gaz inerte à l'intérieur de la coque soit obtenue ; ledit gaz inerte pénétrant à l'intérieur des récipients (10), qui ne sont pas étanches aux fluides afin d'empêcher des processus de combustion des substances constituant lesdites batteries (11) ;
l'unité (1) étant, en outre, dotée d'une soupape d'évent (13) agencée sur une paroi d'extrémité (7) de la coque tubulaire qui sépare ladite cavité allongée (8) d'une cavité de confinement auxiliaire (14) qui lui est adjacente, située dans ledit engin naval et fermée sur l'extérieur dudit engin naval ; ladite soupape d'évent (13) étant du type normalement fermé et configurée pour s'ouvrir lorsque la pression à l'intérieur de la cavité allongée (8) est significativement supérieure à la pression opérante afin de permettre une décharge de gaz jusqu'à la cavité de confinement auxiliaire (14), grâce à quoi est empêchée l'augmentation de pression à l'intérieur de la cavité allongée dans le cas d'une production accidentelle de gaz par une ou plusieurs batteries (11).

2. Unité selon la revendication 1, dans laquelle une unité électronique (15) coopérant avec des capteurs de pression (16 et 17) logés à l'intérieur de la chambre allongée est prévue ; ladite unité électronique (15) étant configurée pour détecter une augmentation rapide de pression à l'intérieur de la chambre allongée, indiquant une production accidentelle de gaz par une ou plusieurs batteries (11), et une diminution de pression à l'intérieur de la chambre allongée (8), indiquant une fuite dans la coque étanche aux fluides ; ladite unité électronique (15) étant configurée pour transmettre un message d'alerte sur lesdites détections.

3. Unité selon la revendication 2, dans laquelle les capteurs de pression comprennent un manomètre.

4. Unité selon la revendication 2, dans laquelle les capteurs de pression comprennent un manostat pour détecter une pression maximale, et un manostat pour détecter une pression minimale.

5. Unité selon l'une quelconque des revendications précédentes, dans laquelle le récipient isolant (10) comprend un corps cupuliforme (19) apte à être fermé par un couvercle isolant plat (20) et configuré pour loger lesdites batteries lithium-ion-polymère (11).

6. Unité selon l'une quelconque des revendications précédentes, dans laquelle les récipients comprennent des premiers récipients (19-A) et des seconds récipients (19-B) ayant une forme complémentaire de manière que, une fois accouplés les uns aux autres, ils soient symétriques par rapport audit axe (5).

7. Unité selon la revendication 6, dans laquelle le récipient (19) a approximativement une forme de L, vu en plan, comprenant un corps principal (21) et un appendice (22) ; lorsque les premiers/seconds récipients (19-A et 19-B) sont accouplés les uns aux autres, leurs corps principaux comportent des parois adjacentes et les appendices (22) s'étendent d'un récipient (19) à l'autre.
